# EUROPEAN PATENT SPECIFICATION

(11) **EP 4 188 641 B1**
(45) Date of publication and mention of the grant of the patent: **31.01.2024**
(21) Application number: 21762100.2
(22) Date of filing: 30.07.2021
(51) Int. Cl.: B23Q 11/00, B23Q 9/00, B08B 15/04, B23B 47/34, B23B 47/28

(54) **AUXILIARY DEVICE FOR GUIDING A DRILL AND FOR SUCTIONING DUST AND SCRAPS**
HILFSVORRICHTUNG ZUM FÜHREN EINES BOHRERS UND ZUM ABSAUGEN VON STAUB UND SCHROTT
DISPOSITIF AUXILIAIRE POUR GUIDER UN FORET ET POUR ASPIRER DES POUSSIÈRES ET DES DÉCHETS

(30) Priority: 30.07.2020 IT 202000018625
(43) Date of publication of application: 07.06.2023
(73) Proprietor: Leonardo S.p.a., 00195 Roma (IT)
(72) Inventor: NUNNO, Francesco Pio, 74023 Grottaglie (TA) (IT)
(74) Representative: Studio Torta S.p.A.
(86) International application number: PCT/IB2021/056973
(87) International publication number: WO 2022/024063

(56) References cited:
- EP-A1- 0 888 201
- EP-B1- 0 888 201
- FR-A1- 2 903 925
- US-A1- 2004 141 821

## Description

### CROSS-REFERENCE TO RELATED APPLICATIONS

This Patent Application claims priority from Italian Patent Application No. 102020000018625 filed on July 30, 2020.

### TECHNICAL SECTOR

The present invention relates to an auxiliary device for guiding a drill and for suctioning dust and scraps generated during drilling or countersinking operations.

The present invention is designed, in particular, for drilling elongated structural components side by side, typically composite elements or hybrid elements with profiles of various shapes.

### BACKGROUND

Portable rotary drills are used in many industrial processes to drill and countersink holes in various types of manufactured goods. Dust particles and scraps generated by the action of the drill are in some cases sucked up near the drill bit by a vacuum cleaner tube held in place by a person standing next to the operator using the drill.

When drilling carbon fibre reinforced plastic (CFRP), the perforation generates and propagates fine dust, so there is a need to extract the dust as effectively as possible to prevent it being inhaled by operators.

Drilling or countersinking guides or jigs are known to be used, which are rested against the surface to be drilled. Guides generally have a cylindrical or conical feed-through which allows the drill bit to pass through and guide it with respect to the surface to be drilled or countersunk.

US 2004/141821 illustrates an auxiliary device for guiding a drill and extracting dust and scraps generated during drilling operations, as defined in the preamble to claim 1.

### OBJECT AND SUMMARY OF THE INVENTION

One aim of the present invention is to suck up with greater precision, effectiveness and timeliness the dust and scraps generated during drilling or countersinking operations with a portable rotary drill.

Another purpose of the invention is to optimise the use of the workforce required to carry out these operations.

A further aim is to eliminate or at least reduce the equipment traditionally used to suction the dust and scraps resulting from the action of the drill. In particular, there is a desire to improve the suction efficiency of the fine dust generated by the drilling of the CFRP.

Another purpose is to carry out these operations easily, even in inaccessible areas and tight spaces.

It is also desirable to carry out simultaneous suction both on the inlet side of the drill bit on the stacked element(s) to be drilled and on the opposite side of the drill bit exit from the element (s) to be drilled.

A further aim is to achieve the above effects by precisely guiding the drill bit.

The above and other purposes and advantages, which will be better understood hereafter, are achieved, according to the invention, by an auxiliary device as defined in the appended claims.

### BRIEF DESCRIPTION OF THE DRAWINGS

For a better understanding of the present invention, a preferred non-limiting embodiment is described below, purely by way of example and with the aid of the attached drawings, wherein:
- figure 1 is a schematic vertical section view, of a portable rotary drill associated with an auxiliary device according to the invention in a drilling and suction operating condition; and
- figure 2 is a schematic vertical section view of the auxiliary device of figure 1 in an open or passive condition.

### DETAILED DESCRIPTION

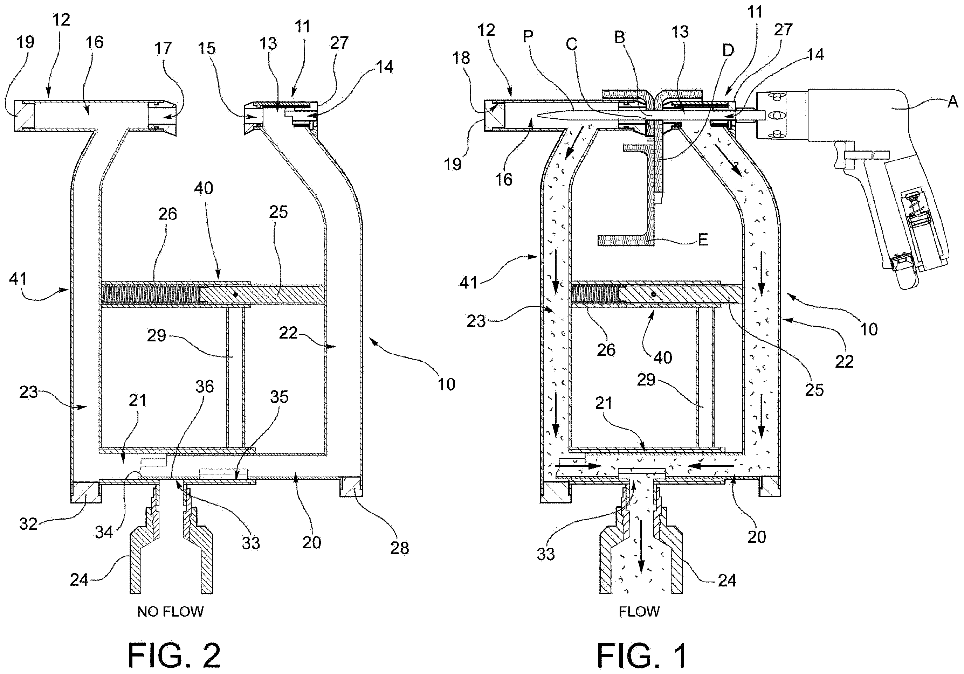

Referring initially to Figure 1, a hand-held rotary drill schematically indicated by A is used in this example to make a through-hole B through a pair of elongated and at least partially stacked structural elements C, D. The shape, arrangement, dimensions and materials of the elements to be drilled are irrelevant to the implementation of the present invention. For illustrative purposes only, one of the elements to be drilled is rigidly connected to a further structural element E. By way of example, the elements to be drilled form a hybrid stack up comprising at least one layer of CFRP. The elements to be drilled can, for example, form a CFRP-CFRP stack up, or titanium-CFRP, aluminium-CFRP or titanium-aluminium-CFRP.

According to a possible alternative not illustrated, the drill A could also operate on a single element D to be drilled.

An auxiliary device for guiding a drill bit P of a portable rotary drill, e.g., drill A, and for suctioning dust and scraps generated during drilling or countersinking operations is indicated overall by the number 10.

The auxiliary device 10 comprises:
- a first and a second operating unit 11, 12, which are configured to be which are configured to be arranged on opposite sides the element D to be drilled and define respectively a first and a second through channel 13, 16 available in use coaxially with each other to be engaged by a tip P of the drill A;
- an adjustable distance constraint assembly 40 connecting the operating units 11, 12;
- at least one actuating element, namely an actuating bar 29, for selectively actuating said constraint assembly 40 so as to adjust the distance between the operating units 11, 12 themselves at a value related to or corresponding to the thickness of the elements C, D or element D to be drilled; and
- a channeling system 41 connecting the channels 13, 16 of the operating units 11, 12 with a suction source (known in itself and not illustrated) to allow during use the suction of dust and scraps generated by the drill A.

In particular, the channel 13 has a rectilinear conformation and has an inlet mouth 14, defined herein as the front one, in which the tip P of the drill A can be introduced during use, and a rear outlet mouth 15, configured to rest against an end surface, defined herein as the front one, of one (D) of the elements C, D or of the element D to be drilled.

The channel 13 has a closed-profile hollow section and can have a tubular, oval, prismatic, polygonal, etc. shape.

The channel 16 also has a rectilinear conformation and has an inlet 17, referred to herein as the front one, into which the bit P is introduced after it has passed through the elements C, D or the element D to be drilled. The inlet mouth 17 is configured to rest against an end surface, referred to herein as the rear one, of one of the elements C, D or the element D to be drilled. As indicated above, the channel 16 of the operating unit 12 is axially aligned with the channel 13 of the operating unit 11, has a closed-profile hollow section and may have a tubular, oval, prismatic, polygonal, etc. conformation.

The outlet mouth 15 of the operating unit 11 and the inlet mouth 17 of the operating unit 12 form a pair of opposing mouths designed to abut against the respective opposite end surfaces of the elements C, D or the element D to be drilled.

The channel 16 may have a rear opening 18 which can be closed with a removable cap 19 to allow periodic inspection and cleaning of the channel 16 itself, for example with a pipe cleaner. Alternatively, the rear end of channel 16, opposite the inlet mouth 17, could be closed.

The channeling system 41 further comprises a third channel 20, in the example shown rectilinear and parallel to the channel 13 and in fluid communication therewith. The channel 20 is telescopically slidingly coupled to a fourth channel 21, which is integral with the operating unit 12, is in fluid communication with the channel 16 and, in the example shown, is rectilinear and parallel to the latter.

The channels 13 and 20 can be connected by an additional channel 22, in the example shown rectilinear and vertical in use.

Likewise, the channels 16 and 21 can be connected by an additional channel 23, in the example shown rectilinear and vertical in use.

A suction fitting 24 is in fluid communication with both the channel 13 and the channel 16. The suction fitting 24 is pneumatically connectable, by means of a hose (in itself known and not illustrated), with a suction source (in itself known and not illustrated), to suction the particles (metal shavings, CFRP dust) generated by the action of the drill A.

In this example, the suction fitting 24 is mounted in a suction opening 33 formed in the channel 21 which slidingly accommodates the channel 20 within it.

According to a possible alternative embodiment not illustrated, the channel 20 could be configured to telescopically receive the channel 21.

The constraint assembly 40 is realised as a telescopic guide, with a stabilising function, formed by two telescopically sliding rectilinear elements 25, 26, each integral with a respective operating unit 11, 12 and, in the example shown, parallel to the channels 13, 16, 20 and 21.

The actuating bar 29 is interposed between the operating units 11 and 12 so that it is possible for an operator to actuate the constraint assembly 40 from only one side of the auxiliary device 1, for example from the side where the drill A operates.

In the illustrated case, the actuating bar 29 rigidly connects the channel 21 and the external telescopic rectilinear element 26.

In addition, the telescopically sliding rectilinear elements 25, 26 are respectively connected to the vertical channel 22, which connects the channels 13 and 20, and the channel 23, which connects channels 16 and 21.

Preferably, the telescopic guide 25, 26 is placed in a central or intermediate position between the pair consisting of the channels 13, 16 and the pair consisting of the channels 20, 21.

In use, the two operating units 11, 12 clamp from opposite sides the elements C, D or the element D to be drilled. Figure 1 shows the device in the operating condition, with the two operating units 11 and 12 telescopically close together. The two opposing mouths 15, 17 abut against two respective opposite end surfaces of the elements C, D or the element D to be drilled. It is therefore possible to suction dust from both the front or anterior inlet side of the drill bit P of the drill A, and from the rear or outlet side of drill bit P.

The length of the channels 13, 16 and their vertical distance from the constraint assembly 40 means that it is possible to get around even very large elements to be drilled.

The channel 16 preferably has a length such that it can accommodate the drill bit P of the drill A inside it when the drill bit has drilled and passed through the elements C, D or the element D to be drilled without dispersing the depression present inside the auxiliary device 10. As shown in figure 1, the channel 16 covers and contains the drill bit P of the drill A, for the sake of operator safety.

The inlet mouth 14 of the channel 13 may be provided with a bushing 27 having a guiding function for the introduction of the bit P. The bushing 27 may be interchangeable in order to select each time a bushing having a through hole suitable for the diameter of the bit P to be guided.

End openings 28, 32 may be provided at opposite ends of the channels 20, 21, with removable closing caps 30, 31 to allow periodic inspection and cleaning of the channels 20, 21 themselves and of the vertical channels 22, 23 connecting the channels 13 and 20 and the channels 16 and 21 respectively.

The opposing mouths 15 and 17, intended to rest against the end surfaces of the elements C, D or the element D to be drilled, can be fitted with angularly adjustable annular support feet, in order to optimise the support against the end surfaces themselves and thus improve suction.

According to a preferred embodiment, the channel 20 has an end 34, an opening 35 spaced from the end 34, and an end or distal section 36 between the opening 35 and the end 34. The opening 35 and the subsequent distal portion 36 are arranged in such a way that in the operating position (figure 1), suction is permitted, and in the open position when the two operating units 11 and 12 are spaced apart, suction is not permitted.

In figure 1, the two operating units 11 and 12 are telescopically close together, and the opposing mouths 15, 17 abut against the opposite end surfaces of the elements C, D or the element D to be drilled. The opening 35 in the channel 20 is at least partially aligned or overlapped with the suction opening 33 in the channel 21, pneumatically connecting the suction source with the mouths 15 and 17.

In figure 2, when there is no need to use the depression for suction purposes, the two operating units 11 and 12 are telescopically spaced. The distal portion 36 of the channel 20 covers the suction opening 33 in the channel 21, occluding it. This optimizes the available pneumatic depression.

The approach of the two operating units 11, 12 for clamping the elements C, D or the element D to be drilled from opposite sides is carried out by an operator simply by gripping the actuating bar 29 and bringing it close to the side from which the drill A is to operate (in this case towards the vertical channel 22) .

In practice, the clamping manoeuvre of the two operating units 11, 12 to the elements C, D or to the element D to be drilled can be carried out by a single operator on the side wherein the drill A is to operate.

Various aspects and embodiments of an auxiliary drilling and suction device 10 have been described. Moreover, the invention is not limited to the described embodiment, but may be varied within the scope defined by the appended claims.

## Claims

1. -Auxiliary device (10) for guiding a portable rotary drill (A) and for suctioning dust and scraps generated by drilling or countersinking operations performed by the drill (A), said auxiliary device (10) including:
- a first and a second operating unit (11, 12), which are configured to be arranged on opposite sides of an element (D) or of a plurality of elements (C, D) to be drilled, stacked at least partially together, and define respectively a first and a second through channel (13, 16) placed in use coaxially with each other to be engaged by a tip (P) of said drill (A);
- adjustable distance constraint means (40) connecting said first and second operating units (11, 12);
- actuating means (29) for selectively actuating said constraint means (40) to adjust the distance between the first and second operating units (11, 12) at a value related to or corresponding to the thickness of the element (D) or of the elements (C, D) to be drilled; and
- a channeling system (41) connecting said first and second channel (13, 16) of said first and second operating unit (11, 12) with a suction source to allow the suction of dust and scraps generated by said drill (A) ;
wherein said constrain means (40) comprise telescopic coupling means (25, 26) between said first and said second operating unit (11, 12); and
wherein said telescopic coupling means comprise two telescopically sliding rectilinear elements (25, 26) parallel to said first and second channel (13, 16) and each rigidly connected with a respective one of said first and second operating units (11, 12);
**characterized in that** said actuating means comprise an actuating bar (29) interposed between said first and second operating units (11, 12) so that it is possible to actuate said constraining means (40) from a single side of the auxiliary device (10) itself.

2. -Auxiliary device according to claim 1, wherein said first channel (13) has a rectilinear conformation and has a first inlet mouth (14), in which the tip (P) of said drill (A) can be introduced and guided, and a rear outlet (15), configured to abut against a front end surface of the element (D) or of the elements (C, D) at least partially stacked to be drilled; and wherein said second channel (16) has a rectilinear conformation and has a second inlet mouth (17) configured to abut against a rear end surface of said element (D) or of said elements (C, D) at least partially stacked to be drilled.

3. -Auxiliary device according to claim 2, wherein said channeling system (41) comprises at least a third channel (20), in fluid communication with said first channel (13), at least a fourth channel (21), in fluid communication with said second channel (16), and a suction opening (33), which is in fluid communication with both said third and fourth channel (20, 21) and which can be connected in use to said suction source.

4. -Auxiliary device according to claim 3, wherein said third and fourth channel (20, 21) are telescopically coupled together in a slidable manner, and wherein said suction opening (33) is obtained on one of said third and fourth channel (20, 21).

5. -An auxiliary device according to claim 4, wherein said fourth channel (21) slidably houses at least partially within its interior said third channel (20) and has said suction opening (33).

6. -Auxiliary device according to any one of claims 2 to 5, wherein said second channel (16) has a rear opening (18) opposite the second inlet mouth (17) and which can be closed with a removable cap (19).

7. -Auxiliary device according to any one of claims 2 to 6, wherein said outlet mouth (15) of said first channel (13) and said second inlet mouth (17) of said second channel (16) destined to abut against the opposite end surfaces of the element (D) or of the elements (C, D) to be drilled are provided with angularly adjustable annular support feet.

8. -Auxiliary device according to any one of claims 5 to 7, wherein said third channel (20) has one end (34), a through opening (35) spaced from said end (34), and a closed-profile hollow terminal portion (36) between the through opening (35) and the end (34) itself; the auxiliary device (10) being able to set two operating conditions:
a first operating condition, in which the two operating units (11, 12) are placed close to one another, the outlet mouth (15) of the first channel (13) and the second inlet mouth (17) of the second channel (16) are arranged in abutment against opposite end surfaces of the element (D) or of the elements (C, D) to be drilled and the through opening (35) in the third channel (20) is at least partially superimposed on the suction opening (33) of the fourth channel (21), so as to allow a pneumatic connection between the suction source and said first and second channels (13, 16); and
a second operating condition, in which said first and second operating units (11, 12) are moved away with respect to the first operating condition so that said terminal portion (36) of said third channel (20) covers the suction opening (33), occluding it.

## Patentansprüche

1. Hilfsvorrichtung (10) zum Führen einer tragbaren Drehbohrmaschine (A) und zum Absaugen von Staub und Abfällen, die durch Bohr- oder Senkvorgänge, die durch die Bohrmaschine (A) durchgeführt werden, erzeugt werden, wobei die Hilfsvorrichtung (10) Folgendes enthält:
- eine erste und eine zweite Betriebseinheit (11, 12), die konfiguriert sind, auf gegenüberliegenden Seiten eines Elements (D) oder von mehreren Elementen (C, D), die gebohrt werden sollen, angeordnet zu sein, mindestens teilweise gemeinsam gestapelt zu sein und einen ersten bzw. einen zweiten Durchgangskanal (13, 16) zu definieren, die im Betrieb koaxial miteinander angeordnet sind, um mit einer Spitze (P) der Bohrmaschine (A) in Eingriff zu sein;
- einstellbare Abstandseinschränkungsmittel (40), die die erste und die zweite Betriebseinheit (11, 12) verbinden;
- Betätigungsmittel (29) zum wahlweisen Betätigen der Einschränkungsmittel (40), um den Abstand zwischen der ersten und der zweiten Betriebseinheit (11, 12) auf einen Wert einzustellen, der mit der Dicke des Elements (D) oder der Elemente (C, D), die gebohrt werden sollen, in Beziehung steht oder ihnen entspricht; und
- ein Kanalbildungssystem (41), das den ersten und den zweiten Kanal (13, 16) der ersten und der zweiten Betriebseinheit (11, 12) mit einer Absaugquelle verbindet, um das Absaugen von Staub und Abfällen, die durch die Bohrmaschine (A) erzeugt werden, zu ermöglichen; wobei
die Einschränkungsmittel (40) ausfahrbare Kopplungsmittel (25, 26) zwischen der ersten und der zweiten Betriebseinheit (11, 12) umfassen und
die ausfahrbaren Kopplungsmittel zwei ausfahrbar gleitende geradlinige Elemente (25, 26) umfassen, die zu dem ersten und dem zweiten Kanal (13, 16) parallel sind und jeweils mit einer jeweiligen der ersten und der zweiten Betriebseinheit (11, 12) starr verbunden sind;
**dadurch gekennzeichnet, dass** die Betätigungsmittel einen Betätigungsstab (29) umfassen, der zwischen der ersten und der zweiten Betriebseinheit (11, 12) angeordnet ist, derart, dass es möglich ist, die Einschränkungsmittel (40) von einer einzelnen Seite der Hilfsvorrichtung (10) selbst zu betätigen.

2. Hilfsvorrichtung nach Anspruch 1, wobei der erste Kanal (13) eine geradlinige Angleichung aufweist und eine erste Einlassmündung (14), in die die Spitze (P) der Bohrmaschine (A) eingebracht und darin geführt werden kann, und einen rückwärtigen Auslass (15), der konfiguriert ist, an einer Vorderseitenoberfläche des Elements (D) oder der Elemente (C, D), die mindestens teilweise gestapelt sind, um gebohrt zu werden, anzuliegen, aufweist; und der zweite Kanal (16) eine geradlinige Angleichung aufweist und eine zweite Einlassmündung (17), die konfiguriert ist, an einer rückwärtigen Oberfläche des Elements (D) oder der Elemente (C, D), die mindestens teilweise gestapelt sind, um gebohrt zu werden, anzuliegen, aufweist.

3. Hilfsvorrichtung nach Anspruch 2, wobei das Kanalbildungssystem (41) mindestens einen dritten Kanal (20) in Fluidkommunikation mit dem ersten Kanal (13), mindestens einen vierten Kanal (21) in Fluidkommunikation mit dem zweiten Kanal (16) und eine Absaugöffnung (33), die sowohl mit dem dritten als auch dem vierten Kanal (20, 21) in Fluidkommunikation ist und die im Betrieb mit der Absaugquelle verbunden sein kann, umfasst.

4. Hilfsvorrichtung nach Anspruch 3, wobei der dritte und der vierte Kanal (20, 21) in einer gleitenden Weise ausfahrbar aneinandergekoppelt sind und die Absaugöffnung (33) an einem des dritten und des vierten Kanals (20, 21) erhalten wird.

5. Hilfsvorrichtung nach Anspruch 4, wobei der vierte Kanal (21) in seinem Innenraum den dritten Kanal (20) mindestens teilweise gleitend aufnimmt und die Absaugöffnung (33) aufweist.

6. Hilfsvorrichtung nach einem der Ansprüche 2 bis 5, wobei der zweite Kanal (16) eine rückwärtige Öffnung (18) aufweist, die der zweiten Einlassmündung (17) gegenüberliegt und die mit einer abnehmbaren Kappe (19) geschlossen werden kann.

7. Hilfsvorrichtung nach einem der Ansprüche 2 bis 6, wobei die Auslassmündung (15) des ersten Kanals (13) und die zweite Einlassmündung (17) des zweiten Kanals (16), die dazu bestimmt sind, an den gegenüberliegenden Stirnoberflächen des Elements (D) oder der Elemente (C, D), die gebohrt werden sollen, anzuliegen, mit in Winkelrichtung einstellbaren ringförmigen Stützfüßen versehen sind.

8. Hilfsvorrichtung nach einem der Ansprüche 5 bis 7, wobei der dritte Kanal (20) ein Ende (34), eine Durchgangsöffnung (35), die vom Ende (34) beabstandet ist, und einen hohlen Anschlussabschnitt (36) mit geschlossenem Profil zwischen der Durchgangsöffnung (35) und dem Ende (34) selbst aufweist; wobei die Hilfsvorrichtung (10) zwei Betriebsbedingungen setzen kann:
eine erste Betriebsbedingung, wobei die zwei Betriebseinheiten (11, 12) nahe zueinander angeordnet sind, die Auslassmündung (15) des ersten Kanals (13) und die zweite Einlassmündung (17) des zweiten Kanals (16) anliegend an gegenüberliegenden Stirnoberflächen des Elements (D) oder der Elemente (C, D), die gebohrt werden sollen, angeordnet sind und die Durchgangsöffnung (35) im dritten Kanal (20) mindestens teilweise auf die Absaugöffnung (33) des vierten Kanals (21) überlagert ist, um eine pneumatische Verbindung zwischen der Absaugquelle und dem ersten und dem zweiten Kanal (13, 16) zu ermöglichen; und
eine zweite Betriebsbedingung, wobei die erste und die zweite Betriebseinheit (11, 12) in Bezug auf die erste Betriebsbedingung wegbewegt werden, derart, dass der Anschlussabschnitt (36) des dritten Kanals (20) die Absaugöffnung (33) abdeckt, wobei er sie verschließt.

## Revendications

1. Dispositif auxiliaire (10) pour guider un foret (A) rotatif portable et pour aspirer de la poussière et des déchets générés par des opérations de forage ou de fraisage réalisées par le foret (A), ledit dispositif auxiliaire (10) comprenant :
- une première et une seconde unité opérationnelle (11, 12) qui sont configurées pour être agencées sur les côtés opposés d'un élément (D) ou d'une pluralité d'éléments (C, D) à forer empilés au moins partiellement ensemble, et définissent respectivement un premier et un deuxième canal débouchant (13, 16) placés, à l'usage, de manière coaxiale entre eux pour être mis en prise par une pointe (P) dudit foret (A) ;
- des moyens de contrainte à distance réglable (40) raccordant lesdites première et seconde unités opérationnelles (11, 12) ;
- des moyens d'actionnement (29) pour actionner sélectivement lesdits moyens de contrainte (40) afin d'ajuster la distance ente les première et seconde unités opérationnelles (11, 12) à une valeur relative à ou correspondant à l'épaisseur de l'élément (D) ou des éléments (C, D) à forer ; et
- un système de canalisation (41) raccordant lesdits premier et deuxième canaux (13, 16) desdites première et seconde unités opérationnelles (11, 12) avec une source d'aspiration pour permettre l'aspiration de la poussière et des déchets générés par ledit foret (A) ;
dans lequel lesdits moyens de contrainte (40) comprennent des moyens de couplage télescopique (25, 26) entre lesdites première et seconde unités opérationnelles (11, 12) ; et
dans lequel lesdits moyens de couplage télescopique comprennent deux éléments rectilignes coulissants par voie télescopique (25, 26) parallèles auxdits premier et deuxième canaux (13, 16) et chacun rigidement raccordé avec une unité respective desdites première et seconde unités opérationnelles (11, 12) ;
**caractérisé en ce que** lesdits moyens d'actionnement comprennent une barre d'actionnement (29) intercalée entre lesdites première et seconde unités opérationnelles (11, 12) de sorte qu'il est possible d'actionner lesdits moyens de contrainte (40) d'un côté unique du dispositif auxiliaire (10) lui-même.

2. Dispositif auxiliaire selon la revendication 1, dans lequel ledit premier canal (13) a une conformation rectiligne et a une première bouche d'entrée (14), dans laquelle la pointe (P) dudit foret (A) peut être introduite et guidée, et une sortie arrière (15), configurée pour venir en butée contre une surface d'extrémité avant de l'élément (D) ou des éléments (C, D) au moins partiellement empilés à forer ; et dans lequel ledit deuxième canal (16) a une conformation rectiligne et a une seconde bouche d'entrée (17) configurée pour venir en butée contre une surface d'extrémité arrière dudit élément (D) ou desdits éléments (C, D) au moins partiellement empilés à forer.

3. Dispositif auxiliaire selon la revendication 2, dans lequel ledit système de canalisation (41) comprend au moins un troisième canal (20), en communication de fluide avec ledit premier canal (13), au moins un quatrième canal (21), en communication de fluide avec ledit deuxième canal (16), et une ouverture d'aspiration (33), qui est en communication de fluide à la fois avec lesdits troisième et quatrième canaux (20, 21) et qui peut être raccordée, à l'usage, à ladite source d'aspiration.

4. Dispositif auxiliaire selon la revendication 3, dans lequel lesdits troisième et quatrième canaux (20, 21) sont couplés, par voie télescopique, ensemble de manière coulissante, et dans lequel ladite ouverture d'aspiration (33) est obtenue sur l'un desdits troisième et quatrième canaux (20, 21) .

5. Dispositif auxiliaire selon la revendication 4, dans lequel ledit quatrième canal (21) loge, de manière coulissante, au moins partiellement, en son intérieur, ledit troisième canal (20) et a ladite ouverture d'aspiration (33).

6. Dispositif auxiliaire selon l'une quelconque des revendications 2 à 5, dans lequel ledit deuxième canal (16) a une ouverture arrière (18) opposée à la seconde bouche d'entrée (17) et qui peut être fermée avec un capuchon amovible (19).

7. Dispositif auxiliaire selon l'une quelconque des revendications 2 à 6, dans lequel ladite bouche de sortie (15) dudit premier canal (13) et ladite seconde bouche d'entrée (17) dudit deuxième canal (16) destinées à venir en butée contre les surfaces d'extrémité opposées de l'élément (D) ou des éléments (C, D) à forer, sont prévues avec des pieds de support annulaires angulairement ajustables.

8. Dispositif auxiliaire selon l'une quelconque des revendications 5 à 7, dans lequel ledit troisième canal (20) a une extrémité (34), une ouverture débouchante (35) espacée de ladite extrémité (34), et une partie terminale creuse à profil fermé (36) entre l'ouverture débouchante (35) et l'extrémité (34) elle-même ; le dispositif auxiliaire (10) pouvant adopter deux conditions opérationnelles :
une première condition opérationnelle, dans laquelle les deux unités opérationnelles (11, 12) sont placées à proximité l'une de l'autre, la bouche de sortie (15) du premier canal (13) et la seconde bouche d'entrée (17) du deuxième canal (16) sont agencées en butée contre des surfaces d'extrémité opposées de l'élément (D) ou des éléments (C, D) à forer et l'ouverture débouchante (35) dans le troisième canal (20) est au moins partiellement superposée sur l'ouverture d'aspiration (33) du quatrième canal (21), afin de permettre un raccordement pneumatique entre la source d'aspiration et lesdits premier et deuxième canaux (13, 16) ; et
une seconde condition opérationnelle, dans laquelle lesdites première et seconde unités opérationnelles (11, 12) sont éloignées par rapport à la première condition opérationnelle de sorte que ladite partie terminale (36) dudit troisième canal (20) recouvre l'ouverture d'aspiration (33), la bouchant.
